# FASCICULE DE BREVET EUROPEEN

(11) **EP 0 985 523 B1**
(45) Date de publication et mention de la délivrance du brevet: **07.09.2005**
(21) Numéro de dépôt: 99450020.5
(22) Date de dépôt: 07.09.1999
(51) Int. Cl.: B32B 17/10, C03C 27/12, B64C 1/14

(54) **Dispositif de localisation d'une rupture dans un panneau transparent à au moins deux plis et panneau obtenu**
Lokalisierungsvorrichtung von Brüchen in transparenten Scheiben mit wenigstens zwei Schichten, und hergestellte Platte
Location device of a crash in a at least two layer transparent panel and obtained panel

(30) Priorité: 09.09.1998 FR 9811388
(43) Date de publication de la demande: 15.03.2000
(73) Titulaire: AIRBUS France, 31060 Toulouse (FR)
(72) Inventeur: Chaumel, Pascal, 31830 Plaisance du Touch (FR); Depeige, Alain, 31170 Tournefeuille (FR)
(74) Mandataire: Thébault, Jean-Louis

(56) Documents cités:
- EP-A- 0 524 537
- WO-A-97/31357
- GB-A- 2 169 239
- GB-A- 2 260 420

## Description

La présente invention concerne un dispositif de localisation d'une rupture dans un panneau transparent à plusieurs plis tels que des pare-brise de cockpit ou des hublots d'avions ainsi que le panneau équipé de ce dispositif.

Dans le domaine du transport, on connaît le problème des impacts d'origines diverses qui peuvent conduire à des dégradations des parties exposées des véhicules telles que les pare-brise, les glaces, les vitres ou les hublots.

En effet, les différents véhicules tant aériens que terrestres ou marins sont munis d'ouvertures équipées de panneaux de protection qui ont pour caractéristique principale d'être transparente.

Pour des raisons de tenue mécanique et/ou de sécurité, ces panneaux sont généralement constitués de plusieurs plis de matériau transparent :
- d'origine minérale comme le verre, le quartz, la silice ou des combinaisons de ceux-ci, ou
- d'origine organique comme les acryliques, les polycarbonates ou certaines résines ou des combinaisons de ceux-ci.

Les associations de ces matériaux et leur choix sont généralement dictés par les paramètres des conditions d'utilisation car les panneaux ainsi réalisés doivent présenter des caractéristiques structurales adaptées à la résistance mécanique nécessaire pour résister :
- aux impacts de différentes nature, oiseaux, grêle, pierre, aux conditions d'utilisation,
- aux variations de pression, de température, ou encore,
- aux phénomènes spécifiques comme l'abrasion.

Les différents plis ont généralement des fonctions dédiées, distinctes les unes des autres. Il est prévu des couches interplis adhésives entre ces différents plis en sorte de les lier les uns aux autres pour obtenir un panneau monolithique d'une part et pour obtenir des effets ou réaliser des actions particulières d'autre part.

De tels effets ou actions consistent à disposer des films antistatiques, et/ou antireflet, des films de filtration du rayonnement, des films pour l'augmentation de la résistance mécanique ou encore des films conducteurs pour assurer le chauffage dans le cas de la fonction dégivrage.

C'est ainsi que dans le domaine des aéronefs de transport civil, ou dans le cas des trains à grande vitesse, les panneaux utilisés, notamment les glaces frontales formant pare-brise de cockpit, sont réalisés de façon connue et courante par une superposition de trois plis de matériau transparent

Le pli extérieur au contact de l'atmosphère présente des caractéristiques de résistance à l'abrasion notamment pour résister au passage des balais d'essuie-glace et aux micro-impacts. Ce pli n'assure pas la résistance mécanique du panneau, il est généralement d'épaisseur modeste.

Le pli médian est un premier pli qui assure la résistance mécanique proprement dite en reprenant tout ou partie des efforts générés par les conditions de vol dans le cas d'un avion par exemple.

Le pli intérieur est un second pli qui assure aussi la résistance mécanique proprement dite en reprenant tout ou partie des efforts générés par les conditions de vol dans le cas d'un avion par exemple.

Au cours de l'exploitation, de tels panneaux peuvent présenter des dégradations suite à des impacts qui engendrent des efforts supérieurs aux résistances mécaniques des plis, ou à des combinaisons d'effets choc mécanique et/ou choc thermique et/ou choc électrique. A ceci s'ajoute l'affaiblissement résultant du vieillissement des matériaux.

Pour donner un ordre d'idée, 5 à 10 % des avions circulant sont affectés chaque année par une dégradation d'au moins un pli d'un panneau.

Dans le cas des avions, ceci est encore plus critique que pour les autres moyens de transport car dans le cas du bris d'un pli, il faut que le pilote procède à l'application d'une procédure particulière à ce genre d'incident.

Pour l'essentiel, cette procédure consiste à diminuer l'altitude pour qu'une éventuelle dépressurisation subite de l'appareil en vol ne soit pas trop traumatisante.

Ceci a pour conséquence immédiate :
- une augmentation de la consommation puisque les moteurs sont conçus et réglés pour présenter le meilleur rendement à une altitude de croisière donnée,
- un déroutement pour atterrir sur l'aéroport le plus proche,
- une réparation immédiate et/ou l'affrètement d'un avion de remplacement quand cela est possible,
- une prise en charge des passagers durant la réparation.

Ceci est particulièrement lourd en coûts, en temps et les conséquences sur l'image de marque et sur la rentabilité s'en trouvent affectées.

Or de nombreuses mises en application d'une telle procédure d'urgence pourraient être évitées si le pilote pouvait avoir une indication sur le type de bris du panneau. Plus précisément, il apparaît primordial pour le pilote de savoir quel est celui ou ceux des plis extérieur, médian ou intérieur qui est ou qui présente des lignes de bris.

En effet, si le pli extérieur seul est affecté, la mise en place de la procédure d'urgence n'est pas nécessaire et le remplacement du panneau peut être différé et réalisé de préférence au cours d'une maintenance programmée ou au moins en un lieu adapté et avec des moyens permettant d'effectuer ce remplacement dans les meilleures conditions.

Si le pli médian ou intérieur présente des lignes de bris, seul ou en plus du pli extérieur, la procédure d'urgence devra être mise en oeuvre mais cette fois de façon justifiée.

De même si les trois plis sont affectés, la procédure d'urgence pourrait être encore renforcée car la résistance devient très précaire.

Or dans près de 95 % des cas, seul le pli extérieur est affecté par la rupture, ce qui est particulièrement préjudiciable pour les exploitants mais aussi pour les utilisateurs qui subissent des désagréments inutiles.

Le dispositif selon la présente invention a pour but de permettre au pilote d'un véhicule comportant un panneau transparent constitué d'au moins deux plis, plus particulièrement un pare-brise de cockpit d'aéronef, de déterminer visuellement si lors de la survenance d'une ligne de bris dans le panneau, celle-ci affecte un ou plusieurs panneaux et lequel ou lesquels.

Ce dispositif est intégré dans le panneau et sa mise en place est réalisée lors de la fabrication du panneau. De ce fait, il est possible d'équiper les véhicules neufs mais aussi les différents véhicules existants avec de tels panneaux. La fabrication n'est quasiment pas perturbée par la mise en place de ce dispositif et les coûts sont très peu affectés surtout en comparaison des non pertes.

A cet effet, le dispositif de localisation d'une rupture concrétisée par au moins une ligne de bris, dans un panneau transparent comprenant au moins deux plis, notamment du pare-brise du cockpit d'un aéronef, se caractérise en ce qu'il comprend un obstacle opaque ou semi-opaque disposé en bordure de la zone utile du panneau et entre deux plis adjacents de sorte que ladite ligne de bris puisse être affectée à l'un desdits plis par inspection visuelle de l'obstable, ladite ligne étant visible en continu en superposition dudit obstacle ou masquée par celui-ci.

Cet obstacle est une bande disposée en bordure de la zone utile du panneau.

Selon un premier mode de réalisation, il est prévu un obstacle interposé entre les deux plis.

Selon un autre agencement, il est prévu deux zones multiplis et un obstacle interposé entre ces deux zones.

Selon encore un autre agencement, il est prévu n plis et n-1 obstacles interposés, interposés un à un entre deux plis consécutifs dont l'un au moins est différent.

Plus particulièrement, l'obstacle est sérigraphié sur l'une des deux faces en vis à vis des deux plis adjacents.

Afin de permettre une meilleure lecture, dans le cas de plusieurs obstacles, chaque obstacle est différent du précédent en forme et/ou en dimensions et/ou en couleur.

L'invention couvre aussi le panneau transparent multiplis obtenu, notamment pour la réalisation d'un pare-brise de cockpit d'aéronef.

L'invention est maintenant décrite en regard des dessins annexés qui représentent un mode de réalisation particulier, non limitatif, les différentes figures représentant :
- figure 1, une vue à travers un panneau à deux plis selon l'invention, à partir de l'intérieur,
- figure 2, une vue en coupe transversale du panneau de la figure 1,
- figures 3A et 3B, les deux cas de propagation d'une ligne de bris dans les plis intérieur et extérieur,
- figure 4, une vue à travers un panneau à trois plis selon l'invention, à partir de l'intérieur,
- figure 5, une vue en coupe transversale du panneau de la figure 4,
- figures 6A, 6B et 6C, les trois cas de propagation d'une ligne de bris dans les plis intérieur, médian et extérieur.

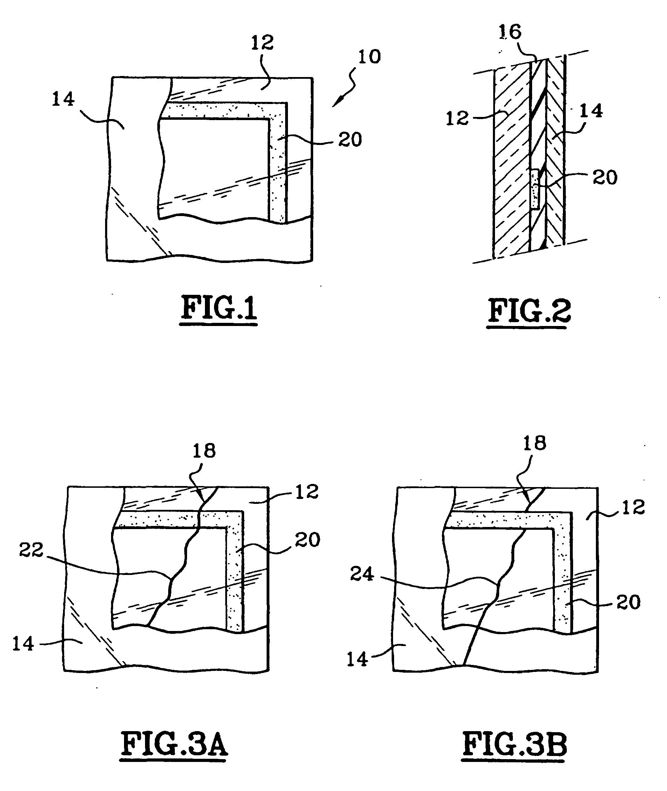

Sur la figure 1, on a représenté un panneau 10 à deux plis intérieur 12 et extérieur 14 en matériau transparent, formant le pare-brise du cockpit d'un avion pour donner un exemple particulièrement sensible.

Ce panneau est vu de l'intérieur si bien que seul le pli intérieur 12 est visible, le pli extérieur apparaissant par arrachage partiel sur cette figure.

La constitution d'un tel panneau est explicitée par la figure 2, sur laquelle on distingue les deux plis mais aussi la couche 16 interplis, en l'occurrence, une couche d'adhésif qui confère à l'ensemble une constitution monolithique.

Cet adhésif est également transparent pour ne pas porter atteinte aux qualités optiques de l'ensemble.

Le dispositif de localisation d'une rupture et de la ligne de bris 18 traduisant cette rupture comprend, comme montré sur les figures 1 et 2, un obstacle 20 visuel, opaque, interposé entre les deux plis 12 et 14 et plus précisément entre le pli 12 intérieur et la couche 16 interplis.

Cet obstacle est donc visible en permanence par le pilote, par transparence à travers le pli intérieur. De ce fait, il convient de disposer cet obstacle de façon à perturber le moins possible le champ de vision à travers le panneau formant pare-brise, c'est à dire généralement la zone centrale.

Un mode de réalisation consiste à interposer une bande relativement étroite sur toute la périphérie du panneau en fonction de sa forme. On note qu'il convient d'éviter de trop rapprocher la bande des bords de façon à supprimer les phénomènes de délamination des plis qui pourraient s'amorcer par la présence d'un élément formant une surépaisseur.

On sait de plus que cette disposition répond à la quasi-totalité des cas, les lignes de bris, même amorcées en partie centrale ayant une tendance naturelle à se propager jusqu'à l'un des bords au moins, surtout lorsque le panneau est en charge.

Ainsi, sur la figure 3A, on a représenté le cas d'une rupture dans le pli 12 intérieur qui se traduit par une ligne de bris 22 qui traverse le champ visuel et qui se prolonge en passant sur l'obstacle 20, et la ligne de bris est visible en continu, en superposition sur la zone correspondant à l'obstacle.

Sur la figure 3B, c'est le pli 14 extérieur qui présente une rupture qui se traduit par une ligne de bris 24. Cette ligne de bris se prolonge de part et d'autre de l'obstacle mais elle est interrompue au droit de cet obstacle. La ligne de bris étant masquée par l'obstacle, elle s'est bien propagée dans le pli extérieur.

On constate que le pilote, dans le cas d'un avion en vol, peut immédiatement se rendre compte de l'état de gravité de la rupture par la détermination du pli affecté. Un tel dispositif est particulièrement fiable et ne peut être interprété de façon erronée. De plus ce dispositif ne peut pas être affecté par des paramètres extérieurs susceptibles de fausser les résultats.

Dans le cas de la rupture de l'obstacle porté par le pli intérieur lors d'une rupture du pli extérieur, l'information ne peut conduire qu'à renforcer la sécurité puisque le pilote peut être tenté de croire que le pli intérieur est brisé alors que seul le pli extérieur l'est. Il y a donc application d'une procédure qui n'est pas nécessaire mais qui va dans le sens d'une limitation des risques.

On constate aussi que le présent dispositif est valable la nuit. Avec un éclairage auxiliaire, toujours présent dans les véhicules notamment les avions, il est également possible de procéder, à partir de l'intérieur, à l'analyse visuelle indiquée précédemment.

Le matériau utilisé pour la réalisation de l'obstacle est de préférence opaque ou pour le moins semi-opaque et d'une couleur qui tranche avec les éventuelles teintes données au panneau par les autres films techniques ainsi qu'exposé ci-avant.

De façon préférentielle, l'obstacle est obtenu par sérigraphie en sorte de prévoir une très forte adhésion de l'obstacle sur la face qui le reçoit. Le pli ainsi sérigraphié est ensuite polymérisé, dans le cas d'un recours aux matériaux organiques, ce qui confère une excellente tenue mécanique de l'obstacle sur le pli.

Le dispositif selon la présente invention est également applicable aux panneaux comportant plus de deux plis. Dans ces cas, il existe deux options.

La première option consiste à interposer un seul obstacle entre la ou les couche(s) extérieure(s) sans effet sur la résistance structurale et la ou les couche(s) intérieure(s) qui assurent la reprise des efforts et qui donc obligent le pilote, en cas de rupture, à engager une procédure d'urgence.

Dans ce cas, le pilote a une information binaire, «danger», «sans danger», avec l'impossibilité de déterminer exactement le lieu de la rupture.

La seconde option consiste à disposer des obstacles différents en forme et/ou en couleurs et/ou en motifs entre chaque pli.

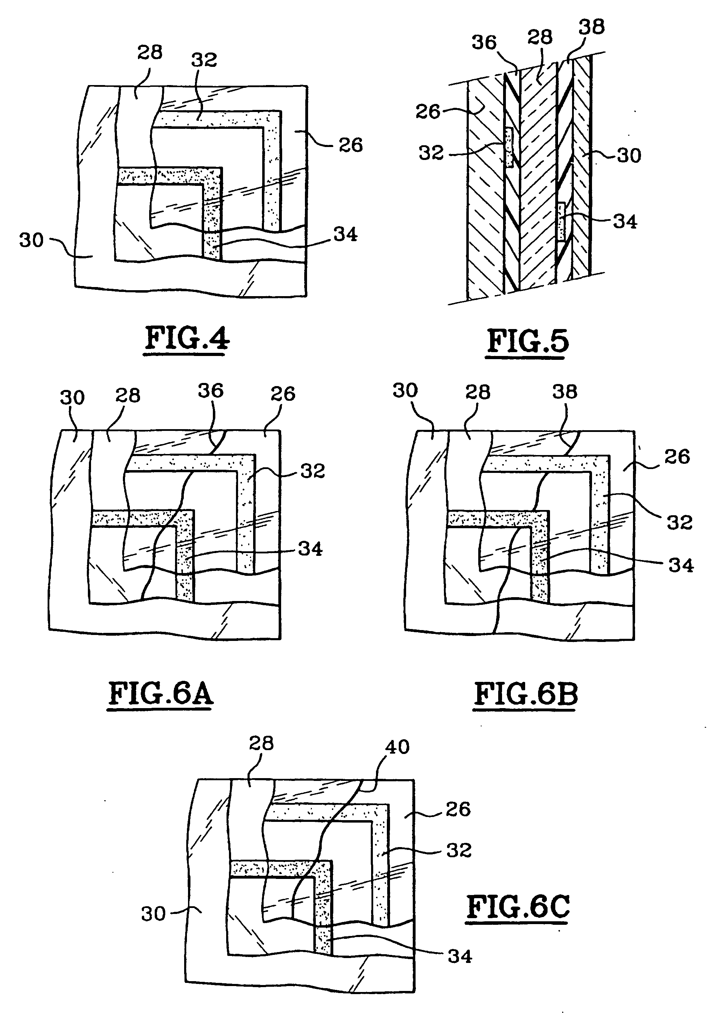

C'est le mode de réalisation des figures 4 et 5.

Dans le cas d'un panneau à trois plis intérieur 26, médian 28 et extérieur 30, un premier obstacle 32 est interposé entre le pli intérieur 26 et le pli médian 28, sur la face du pli intérieur et un second obstacle 34 est interposé entre le pli médian 28 et le pli extérieur 30, sur la face du pli médian.

Les différentes couches 36 et 38 d'adhésifs interplis sont disposées de façon adaptée.

La lecture des différentes figures montrent :
- figure 6A, la rupture du pli médian 28 puisque la ligne de bris 36 passe derrière le premier obstacle 32 et devant le second obstacle 34, l'intégrité du panneau est atteinte et la procédure d'urgence doit être mise en oeuvre,
- figure 6B, la rupture du pli extérieur 30 puisque les premier et second obstacles masquent partiellement la ligne de bris 38 qui est donc discontinue en deux endroits, la résistance mécanique du panneau n'est pas affectée et la procédure d'urgence n'a pas à être mise en oeuvre, et
- figure 6C, la rupture du pli intérieur 26 puisque la ligne de bris 40 passe sur les deux obstacles 32 et 34, l'intégrité du panneau est atteinte et il faut mettre en oeuvre la procédure d'urgence comme dans le cas de la figure 6A.

Un tel agencement permet ainsi de disposer d'une plus grande précision de positionnement des défauts.

## Revendications

1. Dispositif de localisation d'une rupture concrétisée par au moins une ligne de bris (22, 24, 36, 38, 40) dans un panneau (10) transparent comprenant au moins deux plis (12, 14 ; 26, 28, 30), notamment du pare-brise du cockpit d'un aéronef, **caractérisé en ce qu'**il comprend un obstacle (20, 32, 34) opaque ou semi-opaque disposé en bordure de la zone utile du panneau (10) et entre deux plis adjacents de sorte que ladite ligne de bris puisse être affectée à l'un desdits plis adjacents par inspection visuel de l'obstacle, ladite ligne étant visible en continu en superposition dudit obstacle ou masquée par celui-ci.

2. Dispositif de localisation selon la revendication 1, **caractérisé en ce que** l'obstacle est une bande.

3. Dispositif de localisation selon la revendication 1 ou 2, **caractérisé en ce qu'**il comprend deux plis (12, 14) et un obstacle (20) interposé entre les deux plis.

4. Dispositif de localisation selon la revendication 1 ou 2, **caractérisé en ce que** qu'il comprend deux zones multiplis et un obstacle interposé entre les deux zones.

5. Dispositif de localisation selon la revendication 1 ou 2, **caractérisé en ce qu'**il comprend n plis et n-1 obstacles interposés, interposés un à un entre deux plis consécutifs dont l'un au moins est différent.

6. Dispositif de localisation selon l'une quelconque des revendications précédentes, **caractérisé en ce que** l'obstacle est sérigraphié sur l'une des deux faces en vis à vis des deux plis adjacents.

7. Dispositif de localisation selon l'une quelconque des revendications précédentes, **caractérisé en ce que**, dans le cas de plusieurs obstacles, chaque obstacle est différent du précédent en forme et/ou en dimensions et/ou en couleur.

8. Panneau transparent multiplis, notamment pour la réalisation d'un pare-brise de cockpit d'aéronef, **caractérisé en ce qu'**il comprend le dispositif selon l'une au moins des revendications précédentes.

## Patentansprüche

1. Vorrichtung zum Lokalisieren eines Bruchs, der durch wenigstens eine Bruchlinie (22, 24, 36, 38, 40) in einer lichtdurchlässigen Platte (10) mit wenigstens zwei Lagen (12, 14; 26, 28, 30), insbesondere der Windschutzscheibe des Cockpits eines Flugzeugs, gegeben ist, **dadurch gekennzeichnet, dass** sie ein lichtundurchlässiges oder halb lichtundurchlässiges Hindernis umfasst, das am Rand der Nutzzone der Platte (10) und zwischen zwei benachbarten Lagen angeordnet ist, derart, dass die Bruchlinie durch visuelle Beobachtung des Hindernisses einer der benachbarten Lagen zugeordnet werden kann, da die Linie bei Überlagerung mit dem Hindernis entweder ununterbrochen sichtbar ist oder aber durch dieses Hindernis abgedeckt wird.

2. Lokalisierungsvorrichtung nach Anspruch 1, **dadurch gekennzeichnet, dass** das Hindernis ein Streifen ist.

3. Lokalisierungsvorrichtung nach Anspruch 1 oder 2, **dadurch gekennzeichnet, dass** sie zwei Lagen (12, 14) und ein zwischen die zwei Lagen eingefügtes Hindernis (20) umfasst.

4. Lokalisierungsvorrichtung nach Anspruch 1 oder 2, **dadurch gekennzeichnet, dass** sie zwei Mehrfachlagen-Zonen und ein zwischen die zwei Zonen eingefügtes Hindernis umfasst.

5. Lokalisierungsvorrichtung nach Anspruch 1 oder 2, **dadurch gekennzeichnet, dass** sie n Lagen und n - 1 eingefügte Hindernisse umfasst, die einzeln zwischen zwei aufeinander folgende Lagen, wovon wenigstens eine unterschiedlich ist, eingefügt sind.

6. Lokalisierungsvorrichtung nach einem der vorhergehenden Ansprüche, **dadurch gekennzeichnet, dass** das Hindernis ein Siebdruck auf einer der zwei gegenüberliegenden Flächen von zwei benachbarten Lagen ist.

7. Lokalisierungsvorrichtung nach einem der vorhergehenden Ansprüche, **dadurch gekennzeichnet, dass** im Fall mehrerer Hindernisse jedes Hindernis vom vorhergehenden hinsichtlich Form und/oder Abmessungen und/oder Farbe verschieden ist.

8. Lichtdurchlässige Mehrfachlagen-Platte, insbesondere für die Herstellung einer Windschutzscheibe eines Flugzeugcockpits, **dadurch gekennzeichnet, dass** sie die Vorrichtung nach wenigstens einem der vorhergehenden Ansprüche umfasst.

## Claims

1. A device for locating a rupture consisting of at least one breakage line (22, 24, 36, 38, 40) in a transparent panel (10) comprising at least two layers (12, 14; 26, 28, 30), in particular the cockpit windscreen of an aircraft, **characterised in that** it comprises an opaque or semi-opaque obstacle (20, 32, 34) disposed at the border of the area of use of the panel (10) and between two adjacent layers so that said breakage line can be allocated to one of said adjacent layers by visual inspection of the obstacle, said line being continuously visible by being superimposed on said obstacle or masked by it.

2. A location device according to Claim 1, **characterised in that** the obstacle is a strip.

3. A location device according to Claim 1 or 2, **characterised in that** it comprises two layers (12, 14) and an obstacle (20) interposed between the two layers.

4. A location device according to Claim 1 or 2, **characterised in that** it comprises two multi-layer zones and an obstacle interposed between the two zones.

5. A location device according to Claim 1 or 2, **characterised in that** it comprises n layers and n-1 interposed obstacles, interposed one by one between two consecutive layers, at least one of which is different.

6. A location device according to any one of the preceding claims, **characterised in that** the obstacle is screen printed on one of two opposing faces of two adjacent layers.

7. A location device according to any one of the preceding claims, **characterised in that**, in the case of several obstacles, each obstacle is different from the previous one in form and/or dimensions and/or colour.

8. A multi-layer transparent panel, in particular for producing an aircraft cockpit windscreen, **characterised in that** it comprises the device according to at least one of the preceding claims.
